# EUROPÄISCHE PATENTSCHRIFT

(11) **EP 0 624 784 B1**
(45) Veröffentlichungstag und Bekanntmachung des Hinweises auf die Patenterteilung: **16.07.1997**
(21) Anmeldenummer: 94107159.9
(22) Anmeldetag: 06.05.1994
(51) Int. Cl.: G01N 9/00

(54) **Dichtegeber**
Density sensor
Densimètre

(30) Priorität: 08.05.1993 DE 9307022 U
(43) Veröffentlichungstag der Anmeldung: 17.11.1994
(73) Patentinhaber: BOPP & REUTHER MESSTECHNIK GmbH, D-68305 Mannheim (DE)
(72) Erfinder: Herzog, Jean-Philippe, Dr., D-68519 Viernheim (DE); Maydt, Karl, D-69469 Weinheim (DE)
(74) Vertreter: Palgen, Peter, Dr. Dipl.-Phys.

(56) Entgegenhaltungen:
- WO-A-90/12306
- DE-A- 2 249 269
- DE-A- 3 908 439
- DE-C- 3 308 289

## Beschreibung

Die Erfindung bezieht sich auf einen Dichtegeber der dem Oberbegriff des Anspruchs 1 entsprechenden Art.

Die schwingungstechnische Messung der Dichte eines fließfähigen Mediums basiert auf der Messung der Eigenfrequenz eines das fließfähige Medium enthaltenden schwingfähigen Systems, welche von der Dichte des fließfähigen Mediums abhängt. Auf diesem Meßprinzip beruhende Dichtegeber sind in vielfältigen Ausführungsformen bekannt. Besonders vorteilhaft hinsichtlich ihrer Meßgenauigkeit haben sich dabei Dichtegeber erwiesen, bei denen die das fließfähige Medium enthaltenden Teile des schwingfähigen Systems die Schenkel einer Stimmgabel bilden. Dabei ist es besonders wichtig, daß eine hohe Resonanzschärfe des Systems infolge einer gerichteten, eine eindeutig bevorzugte Schwingungsebene aufweisenden Schwingung ohne durch Corioliskräfte hervorgerufene Torsionsanteile gegeben ist. Zur kontinuierlichen Dichtemessung eines fließenden Mediums ist es weiterhin von Vorteil, wenn die beiden Stimmgabelschenkel als Durchströmröhren ausgebildet sind, durch welche das fließfähige Medium kontinuierlich durchströmen kann.

Aus der WO 90 12 306 ist ein derartiger Dichtegeber bekannt, bei dem die beiden Stimmgabelschenkel jeweils durch eine Rohrschleife aus einem elastischen Material gebildet werden, wobei die Rohrschleifen in parallelen Ebenen einander gegenüberliegend und voneinander beabstandet angeordnet sind.

Der Halterung der Rohrschleifen dient ein flaches Einspannelement, in dem die Schenkel der Rohrschleifen festgelegt sind und das senkrecht zu den einander parallel gegenüberliegenden Ebenen der Rohrschleifenanordnungen verläuft.

Auf der den Rohrschleifen abgewandten Seite des Trägers sind die freien Enden zweier parallel zu den Ebenen einander gegenüberliegender Schenkel durch einen Rohrbogen zu einer endlosen doppelten Rohrschleifenanordnung verbunden, wobei die beiden anderen Schenkel in ihrer Richtung verlängert sind und die Anschlußrohre der Rohrschleifenanordnung bilden.

Auf einem sich zentral zwischen den Rohrschleifen von dem Träger bis zu den Rohrkrümmungen erstreckenden Halter sind der Schwingungsanregung bzw. der Frequenzmessung dienende, auf die Rohrkrümmungen wirkende Erreger- und Aufnehmerspulen eines elektromagnetischen Schwingkreises angeordnet, die mit an den Rohrkrümmungen vorgesehenen, den Erreger- und Aufnehmerspulen gegenüberliegend angeordneten Erreger- und Aufnehmermagneten zusammenwirken.

Zwar ist dieser Dichtegeber durch die Ausbildung seiner "Stimmgabel" als endlose, doppelte Rohrschleife gut für den Einsatz in der Lebensmittelindustrie geeignet, da der Strömungsweg für das Medium, von dem die Dichte gemessen werden soll, keine tote Ecken, Spalte oder sehr enge Krümmungsradien aufweist und auch gut zu reinigen ist. Dabei können mögliche Ablagerungen, in denen sich Bakterienherde bilden können, durch Hindurchführung eines "Molchs" durch das Rohrschleifensystem auf einfache Weise entfernt werden. Es hat sich allerdings gezeigt, daß dieser Dichtegeber hinsichtlich seiner Meßwertauflösung und Meßstabilität verbesserungsfähig ist.

Der Erfindung liegt daher die Aufgabe zugrunde, einen gattungsgemäßen Dichtegeber so weiterzuentwickeln, daß er bei prinzipiell gleichbleibendem Aufbau der "Stimmgabel" hinsichtlich der zu erzielenden Meßgenauigkeit wesentlich verbessert wird, ohne daß hierdurch seine Herstellung nennenswert aufwendiger und teurer wird.

DE-A-2249269 bezieht sich auf einen Dichtegeber, der mit einem mit der zu untersuchenden Flüssigkeit gefüllten Rohr und einem als trennmassdienenden Verbindungsstück versehen ist.

Diese Aufgabe wird durch die in Anspruch 1 wiedergegebene Erfindung gelöst.

Dadurch, daß das Einspannelement als Massekörper ausgebildet ist, dessen Masse mindestens das Vierfache der Masse der Rohrschleifenanordnung beträgt, besitzt der Massekörper ein ausreichend hohes Massenträgheitsmoment und eine ausreichende Steifigkeit, wodurch die Schwingung der die Stimmgabelschenkel bildenden U-förmigen Rohre eine ausreichende Güte aufweist, um die gewünschte Meßwertauflösung und Meßstabilität des erfindungsgemäßen Dichtegebers zu erzielen. Der Massekörper dient gleichzeitig für die Rohrschleifen als Kopplungselement, wodurch die Schwingungsenergie von der einen Rohrschleife auf die zweite übertragen wird.

Bei einer bevorzugten Ausführungsform eines erfindungsgemäßen Dichtegebers wird eine hohe Betriebssicherheit und Langlebigkeit des Dichtegebers in Verbindung mit einer einflachen, kostengünstigen Herstellbarkeit seiner "Stimmgabel" nach Anspruch 2 durch eine mehrteilige Ausführung des Massekörpers erreicht, bei der dieser ein Mittelteil und ein erstes das eine der beiden U-förmigen Rohre auf die eine Seite des Mittelteils sowie ein zweites das andere der U-förmigen Rohre auf die andere Seite des Mittelteils festlegendes Außenteil umfaßt.

Bei einer ersten vorteilhaften Ausgestaltung dieses Massekörpers sind gemäß Anspruch 3 dessen Teile miteinander und/oder mit den Schenkeln der U-förmigen Rohre verschweißt oder verlötet, wodurch der Massekörper und damit der diesen enthaltende Dichtegeber besonders günstig herzustellen ist.

Eine weitere vorteilhafte Ausgestaltung des Massekörpers ist Gegenstand des Anspruchs 4. Dadurch, daß der Massekörper nach Lösen der Verschraubung in Richtung der Schenkel der U-förmigen Rohre verlagerbar ist, kann die Eigenfrequenz des nicht mit einem Medium beaufschlagten Dichtegebers eingestellt werden.

Besonders unempfindlich gegen äußere Störeinflüsse ist der Dichtegeber dann, wenn nach Anspruch 5 die Rohre so ausgebildet sind, daß die Eigenfrequenz der durch die Rohrschleifenanordnung gebildeten Stimmgabel - je nach verwendetem Material - in der Größenordnung von 500 bis 1000 Hz, bevorzugt bei etwa 750 Hz, also oberhalb der häufigsten äußeren Störfrequenz von etwa 500 Hz, liegt.

Besonders vorteilhafte Ausgestaltungen der Einrichtungen zur Schwingungsanregung und Frequenzmessung bei einer ersten, insbesondere zur Dichtebestimmung von fließfähigen Medien bei Raumtemperatur oder darunter vorgesehenen Ausführungsform sind Gegenstand der Ansprüche 6, 7 und 8. Hierbei sind einerseits die Erregerspule und das Erregerankopplungselement, andererseits die Aufnehmerspule und das Aufnehmerankopplungselement jeweils einander gegenüberliegend mittig in den 180° Rohrkrümmungen der U-förmigen Rohre angeordnet. Bei einer angeregten Schwingung werden demnach sowohl die Spulen als auch die Ankopplungselemente zusammen mit den Rohrkrümmungen periodisch verlagert.

Eine insbesondere der Dichtebestimmung von fließfähigen Medien unter hohen Temperaturen dienende Ausführungsform des erfindungsgemäßen Dichtegebers ist Gegenstand der Ansprüche 9 bis 11. Sie umfaßt einen Schwingungsantrieb, bei dem zwei Spulen auf separaten, an dem Massekörper befestigten Trägerarmen angeordnet sind und sich beidseitig der Rohrschleifenanordnung etwa parallel zu den von den beiden U-förmigen Rohren aufgespannten Ebenen bis zu den Rohrkrümmungen erstrecken. Die Spulenachsen liegen auf einer Geraden und schneiden die Mittellinie der Rohrschleifenanordnung senkrecht. Den Spulen gegenüberliegend sind auf den den äußeren Rohrschleifenseiten zugewandten Mantelflächen der Rohrkrümmungen die Ankopplungselemente angeordnet, die jeweils mit einer der Spulen zusammenwirken. Bei dieser Ausführungsform des erfindungsgemäßen Dichtegebers bildet die eine Spule-Ankopplungselement-Anordnung den Schwingungsantrieb, wogegen die andere der Messung der Eigenfrequenz der Rohrschleifenanordnung dient. Um die Trägerarme möglichst frei von Schwingungen zu halten, ist zwischen den Trägerarmen eine Versteifungsbrücke vorgesehen, die sich nahe der Rohrkrümmungen durch das Innere der Rohrschleifenanordnung erstreckt und die Mittellinie der Rohrschleifenanordnung etwa senkrecht schneidet.

Durch die Anordnung der Spulen auf separaten Trägerarmen sind die Spulen thermisch von den U-förmigen Rohren entkoppelt, was sich vorteilhaft auf die Meßstabilität und Meßwertgenauigkeit auswirkt, wenn die Dichte fließfähiger Medien unterschiedlicher, insbesondere hoher Temperaturen gemessen werden soll.

Durch die Konzeptionen der Schwingungsantriebe bzw. der Einrichtungen zur Messung der Eigenfrequenz der beschriebenen bevorzugten Ausführungsformen erfindungsgemäßer Dichtegeber können die beiden Rohrschleifen einander dicht benachbart angeordnet werden, wodurch die Schwingungseigenschaften der Rohrschleifenanordnung weiter verbessert werden.

Bei den beschriebenen Einrichtungen zur Schwingungsanregung bzw. zur Frequenzmessung können die Erreger- bzw. die Abnehmerspule mit Spulenkernen aus weichmagnetischem Material bestückt sein. Das jeweilige Ankopplungselement besteht dann aus einem Permanentmagneten, dessen Pole in Richtung der jeweiligen Spulenachse weisen (Ansprüche 12 und 14).

Es ist aber ebenso möglich, die Spulenkerne als Permanentmagnete auszubilden und als Ankopplungselemente ferromagnetische Plättchen vorzusehen (Ansprüche 13 und 5), wodurch bereits ohne Spulenstrom ein statisches Magnetfeld erzeugt wird, das zusammen mit dem jeweiligen ferromagnetischen Plättchen eine Vorspannung der Rohrschleifenanordnung des Dichtegebers hervorruft. Versuche haben gezeigt, daß durch diese Maßnehme die Schwingungsgüte der Rohrschleifenanordnung nochmals verbessert wird.

Besonders vorteilhaft ist es, wenn gemäß Anspruch 16 für den Schwingungsantrieb und für die Einrichtung zur Messung der Eigenfrequenz der Rohrschleifenanordnung Spulen, Spulenkerne und Ankopplungselemente gleicher Bauart Verwendung finden, da hierdurch die Kosten für die Lagerhaltung der Bauteile gesenkt werden und bei der Produktion keine Fehler durch Verwechslungen einander äußerlich zwar ähnlicher, jedoch unterschiedliche Charakteristika aufweisender Teile auftreten können.

Unabhängig von der Anordnungsweise der Erreger- bzw. Aufnehmerspulen und der Erreger- bzw. Aufnehmerankopplungselemente ist es hinsichtlich des Wirkungsgrades des Schwingungsantriebes und der Meßstabilität eines erfindungsgemäßen Dichtegebers vorteilhaft, wenn gemäß Anspruch 17 ferromagnetische Abschirmungen an den Spulen und/oder an den Ankopplungselementen vorgesehen sind, mittels welchen diese gegen äußere Magnetfelder abgeschirmt sind.

Für die Funktionssicherheit und die Meßgenauigkeit ist es von Vorteil, wenn der Dichtegeber ein vakuumdichtes Gehäuse umfaßt, in welchem die Rohrschleifenanordnung untergebracht ist (Anspruch 18).

Durch einen Molch besonders leicht mechanisch zu reinigen und damit für die Verwendung im Bereich der Lebensmittelindustrie besonders geeignet ist der Dichtegeber dann, wenn gemäß Anspruch 19 die Rohrkrümmungen an den Scheiteln der U-förmigen Rohre und an dem Rohrbogen mit einem mittleren Biegeradius von mindestens dem Doppelten des Rohrinnendurchmesser ausgeführt sind.

Die Bemessung der Wandstärke der U-förmigen Rohre bzw. der ganzen Rohrschleifenanordnung nach Anspruch 20 gewährleistet eine Stabilität, die Störungen durch Corioliskräfte und unerwünschte äußere Einwirkungen weitestgehend ausschließt.

Die Rückwirkungen von Corioliskräften auf die Eigenfrequenz und Frequenzstabilität können sicher ausgeschlossen werden, wenn gemäß Anspruch 21 die Torsionssteifigkeit der Rohrschleifenanordnung um ein Mehrfaches größer als deren Biegefestigkeit ist.

Die Erfindung wird anhand in der Zeichnung dargestellter Ausführungsbeispiele erläutert.
Fig. 1 zeigt ein erstes Ausführungsbeispiel eines erfindungsgemäßen Dichtegebers in einer Übersicht;
Fig. 2 zeigt einen Längsschnitt desselben Dichtegebers gemäß der Ansicht II-II in Fig. 1;
Fig. 3 zeigt ein weiteres Ausführungsbeispiel eines erfindungsgemäßen Dichtegebers in einer Übersicht;
Fig. 4 zeigt einen Längsschnitt dieses Dichtegebers gemäß der Ansicht IV-IV in Fig. 3.

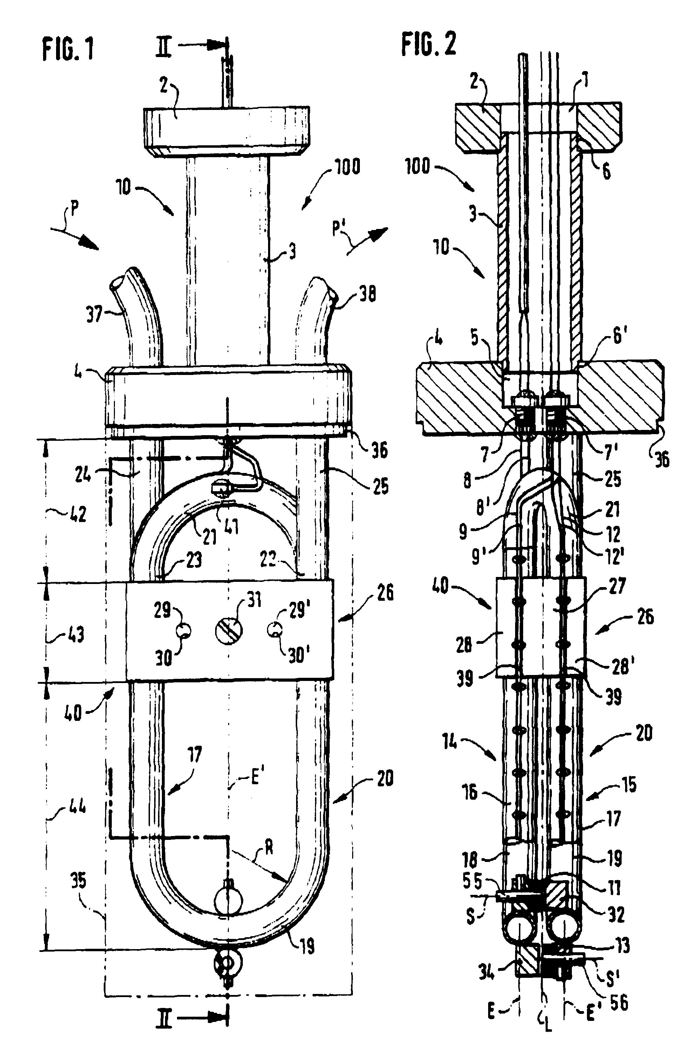

Wenn im folgenden von "oben" bzw. "unten" die Rede ist, so beziehen sich die Angaben auf die in der Zeichnung dargestellte hängende Betriebsstellung des Dichtegebers; die Angaben "links", "rechts", "vorn" und "hinten" beziehen sich auf die Darstellung in Fig. 1.

Der in den Fig. 1 bis 4 als Ganzes mit 100 bezeichnete Dichtegeber umfaßt ein Befestigungsstück 10, welches aus einem oberen, kreissymmetrischen, eine zentrale Bohrung 1 aufweisenden Anschlußteil 2 besteht, von welchem aus sich symmetrisch zur Längsachse L des Dichtegebers nach unten ein rohrförmiges Zwischenstück 3 erstreckt, an dessen unterem Ende ein zur Längsachse L rotationssymmetrischer Rohrschleifenträger 4 angeordnet ist. Im seinem Zentrum ist der Rohrschleifenträger 4 mit einer kreisrunden Vertiefung 5 ausgestattet, die von oben etwa über zwei Drittel der Dicke des Rohrschleifenträgers 4 in denselben hineingearbeitet ist und deren Durchmesser dem Durchmesser der Bohrung 1 entspricht. Das rohrförmige Zwischenstück 2 weist an beiden Enden Rohrfortsätze 6,6' geringeren Außendurchmessers auf, derart, daß der obere Rohrfortsatz 6 in die Bohrung 1 des Anschlußteils 2, der untere Rohrfortsatz 6' in die Ausnehmung 5 des Rohrschleifenträgers 4 einschiebbar ist und jeweils ein Preßsitz gebildet wird. Eine dauerhafte Verbindung zwischen dem rohrförmigen Zwischenstück 3 und dem Anschlußteil 2 einerseits und dem rohrförmigen Zwischenstück 3 und dein Rohrschleifenträger 4 andererseits kann durch Verschweißen oder Verlöten erzeugt werden. Der der Aufnahme einer Rohlschleifenanordnung 20 dienende Rohrschleifenträger 4 umfaßt zwei symmetrisch zu Längsachse L am Boden der Ausnehmung 5 angeordnete Durchführungen 7,7', die der vakuumdichten Durchführung der Temperatursensordrähte 8,8', der Anschlußdrähte 9,9' für die Erregerspule 11 und der Anschlußdrähte 12,12' für die Abnehmerspule 13 dienen.

Die einteilig durch Biegen eines Rohres kreisrunden Querschnitts hergestellte, unterhalb des Rohrschleifenträgers 4 angeordnete Rohrschleifenanordnung 20 umfaßt zwei Stimmgabelschenkel 14,15 bildende U-förmige Rohre 16,17, die jeweils eine Ebene E bzw. E' aufspannen, derart, daß die Ebenen E,E' einander parallel liegen. Die einander parallel liegenden Rohrkrümmungen 18,19 sind halbkreisförmig mit einem etwa dem Doppelten des Rohrdurchmessers entsprechenden inneren Krümmungsradius R ausgebildet. Mittels eines, ebenfalls den inneren Krümmungsradius R aufweisenden Rohrbogens 21 sind die beiden U-förmigen Rohre 16,17 an den freien Enden zweier parallel zu den Ebenen E,E' einander gegenüberliegender Schenkel 22,23 zu einer endlosen doppelten Rohrschleife verbunden. Die beiden anderen nach oben verlängerten Schonkel 24,25 sind symmetrisch zur Längsachse L vakuumdicht durch den Rohrschleifenträger 4 hindurchgeführt. Sie bilden die Anschlußrohre für die Rohrschleifenanordnung 20. Die Rohrschleifenanordnung 20 wird von den Schenkeln 24,25 getragen und ist ansonsten frei. Die Schenkel 24,25 haben eine gewisse Länge und wirken schwingungsdämpfend auf äußere Störungen. Die nach oben aus dem Rohrschleifenträger 4 heraustretenden Rohrabschnitte bilden die Anschlußleitungen 37,38 für das z.B. in Richtung der Pfeile P,P' die Rohrschleifenanordnung 20 durchströmende, fließfähige Medium, welches die U-förmigen Rohre 16,17 nacheinander passiert.

Unterhalb des Rohrbogens 21 und diesem nahe, d.h. wo dieser in die einander parallelen Schenkel der U-förmigen Rohre 16,17 übergeht, ist ein als Klemmvorrichtung ausgebildeter Massekörper 26 angeordnet, welcher ein zwischen den U-förmigen Rohren 16,17 angeordnetes und deren Abstand vorgebendes Mittelteil 27 und zwei jeweils ein U-förmiges Rohr auf das Mittelteil 27 pressende Außenteile 28,28' umfaßt, welche mittels zweier symmetrisch zur Längsachse L in dem Mittelteil 27 vorgesehener Stifte 29,29', die in die Führungsbohrungen 30,30' der Außenteile 28,28' eingreifen, geführt werden und durch eine zentrale Spannschraube 31 gegeneinander geklemmt werden. Die Teile 27,28,28' weisen zur Aufnahme der Rohrschenkel im Querschnitt etwa halbkreisförmige Ausnehmungen auf, so daß die Rohrschenkel fast ganz umspannt sind und lediglich die Spalte 39 zwischen den Teilen 27,28 und 28' verbleiben. Die Gesamtmasse des Massekörpers 26 beträgt mindestens das Vierfache der Masse der Rohrschleifenanordnung 20, gerechnet von dem Rohrschleifenträger 4 an. Zur Verbesserung der Entkopplung der Rohrschleifenanordnung 20 von äußeren Schwingungen kann die Masse des Massekörpers 26 jedoch auch erheblich höher gewählt werden.

Die gegen ihre Scheitel hin von dem Massekörper 26 frei vorkragenden U-förmigen Rohre 16,17 führen gegenüber dem Massekörper 26 Biegeschwingungen gegeneinander in einer gemäß Fig. 2 in der Zeichenebene gelegenen Ebene aus und bilden eine Stimmgabelanordnung 40.

Die Ausgestaltung des Massekörpers 26 ist jedoch keinesfalls auf dieses Ausführungsbeispiel beschränkt, welches zwar sehr gute Eigenschaften hinsichtlich seiner Montierbarkeit und der Funktionssicherheit eines mit diesem ausgestatteten Dichtegebers liefert, jedoch recht aufwendig herzustellen ist. Es ist beispielsweise ebenfalls möglich, sämtliche Teile des Massekörpers aus unbearbeiteten Flachmaterial herzustellen. Bei der Montage der Teile des Massekörpers 26 auf der Rohrschleife 20 kann auf die Spannschraube 31 und die Stifte 29,29' verzichtet werden, wenn die Teile durch Löten oder Punktverschweißungen aneinander bzw. an der Rohrschleifenanordnung festgelegt werden. Ein derartig ausgestalteter und montierier Massekörper ist daher sehr kostengünstig herstell- und montierbar.

Der Anregung der Eigenfrequenz der Stimmgabelanordnung 40, welche im Bereich von 750 Hertz liegt, dient bei der in den Fig. 1 und 2 dargestellten Ausfürungsform eine auf der dem Rohrschleifeninnern zugewandten Mantelfläche in der Mitte der Rohrkrümmung 18 angeordnete, mit ihrer Spulenlängsachse S senkrecht die Ebenen E,E' durchstoßende Erregerspule 11 mit einem Spulenkern 55, welcher ein an der Rohrkrümmung 19 vorgesehenes Erregerankopplungselement gegenüberliegt. Der Spulenkern 55 kann aus einem weichmagnetischen Material bestehen; dann ist das Ankopplungselement 32 als Permanentmagnet ausgebildet, dessen Pole in Richtung der Spulenachse S weisen. Oder der Spulenkern ist als Permanentmagnet ausgebildet, dessen Pole in Richtung der Spulenachse S weisen, und das Ankopplungselemnent 32 wird von einem ferromagnetischen Plättchen gebildet.

Zur Messung der Eigenfrequenz ist auf der nach außen gerichteten Mantelfläche in der Mitte der Rohrkrümmung 19 eine mit ihrer Spulenachse S' die Rohrschleifenebenen E,E' senkrecht durchstoßende Aufnehmerspule 13 mit einem Spulenkern 56 angeordnet, welcher ein an der Rohrkrümmung 18 vorgesehenes Aufnehmerankopplungselement 34 gegenüberliegt. Für die Konzeption des Spulenkerns 56 sowie des Aufnehmerankopplungselements 34 bestehen die am Beispiel der Einrichtung zur Schwingungsanregung erläuterten Möglichkeiten. Um die Empfindlichkeit des Dichtegebers zu maximieren, finden Spulen und Ankopplungselemente mit möglichst geringer Masse Verwendung. Die Erreger- und Aufnehmerspulen 11,13 können gleichen Typs sein, hinsichtlich der Variabilität des Dichtegebers im Einsatz mit verschiedenen elektrischen Schaltungen ist es jedoch ebenfalls möglich, unterschiedliche Spulentypen einzusetzen, die dann wahlweise als Erreger- oder Aufnehmerspulen betrieben werden können.

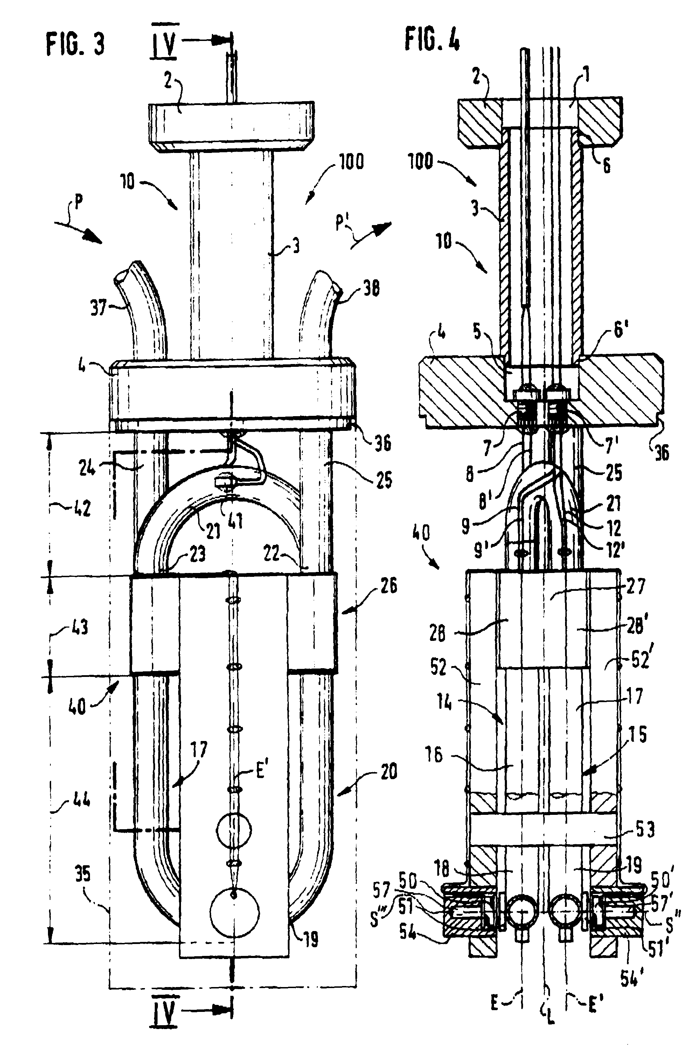

Bei einer weiteren, in Fig. 3 und 4 dargestellten Ausführungsform eines erfindungsgemäßen Dichtegebers dienen der Frequenzmessung bzw. der Anregung der Eigenfrequenz der Stimmgabelanordnung zwei Spulen 50 bzw. 50' mit Spulenkernen 57,57', die auf separaten Trägerarmen 52,52' außerhalb der Rohrschleifenanordnung 20 im Bereich der Rohrkrümmungen 18,19 angeordnet sind und deren auf einer gemeinsamen Geraden liegenden Spulenachsen S",S'" die Ebenen E,E' senkrecht durchstoßen. Die Spulen wirken mit Ankopplungselementen 51,51' zusammen, die - den Spulen 50,50' gegenüberliegend - jeweils auf der der äußeren Rohrschleifenseite zugewandten Mantelfläche der Rohrkrümmungen 18,19 angeordnet sind. Die Spulen können wiederum mit Kernen aus weichmagnetischen Werkstoffen versehen sein und dementsprechend mit als Permanentmagneten ausgebildeten Ankopplungselementen zusammenwirken, oder aber es finden als Spulenkerne Permanentmagnete und als Ankopplungselemente ferromagnetische Plättchen Verwendung.

Bei dieser Ausführungsform dienen die Spule 50' und das Ankopplungselement 51', die auf das eine U-förmige Rohr 17 wirken, der Schwingungsanregung, wogegen die Schwingungsmessung mit Hilfe der Spule 50 und dem Ankopplungselement 51, welche mit dem anderen U-förmigen Rohr 16 zusammenwirken, erfolgt.

Die Trägerarme 52,52' sind mit dem Massekörper 26 fest verbunden und erstrecken sich außerhalb der Rohrschleifenanordnung 20 paralalel zu den Ebenen E,E'. Zur zusätzlichen Versteifung der Trägerarme 52,52' ist eine diese miteinander verbindende Versteifungsbrücke 53 vorgesehen, welche sich durch das Innere der Rohrschleifenanordnung 20 derart erstreckt, daß sie durch die Ursprünge der Radien R der Rohrkrümmungen 18,19 verläuft.

Wie aus Fig. 4 ersichtlich, sind die Spulen 50,50' in Spulengehäusen 54,54' gelagert, die die Spulen 50,50' mit Ausnahme der dem jeweiligen Ankopplungselement 51,51' zugewandten Seite vollständig umgeben. Die Spulengehäuse 54,54' dienen der magnetischen Abschirmung der Spulen 50,50' zur Erhöhung der Meßgenauigkeit des Dichtegebers.

Der Temperaturmessung dienen zwei auf der Mantelfäche des Rohrbogens 21 angeordnete Widerstands-Temperatursensoren 41 vom Typ PT 100 und PT 1000.

Unterhalb des Rohrschleifenträgers 4 ist die Rohrschleifenanordnung 20 durch ein in Fig.1 gestrichelt angedeutetes Gehäuse 35, welches die Form eines einseitig geschlossenen Rohrendes aufweist, gegen die Umgebung abgeschlossen. Mit seinem oberen, offenen Ende ist das Gehäuse 35 auf einen Fortsatz kleineren Durchmessers 36 des Rohrschleifenträgers 4 aufgeschoben und mit diesem vakuumdicht laserverschweißt.

Alternativ kann auch ein nicht vakuumdicht mit dem Rohrschleifenträger 4 verbundenes Gehäuse Verwendung finden, welches dann in seinem Innern eine in der Zeichnung nicht dargestellte Trockenpatrone trägt, die eventuell beim Einsatz bei tiefen Temperaturen kondensierende Flüssigkeit aufnimmt.

Zur Messung der Dichte eines fließfähigen Mediums wird dieses z.B. in Richtung der Pfeile P,P' durch die Rohrschleifenanordnung 20 gepumpt. Mittels der Einrichtung zur Schwingungserregung 11,32;50',51' werden die beiden unterhalb des Massekörpers 26 befindlichen parallelen U-förmigen Rohre 16,17 zu einer Schwingung nahe ihrer Eigenfrequenz angeregt. Die von der Dichte des fließfähigen Mediums abhängige Schwingfrequenz wird von der Einrichtung zur Messung der Schwingfrequenz 13,34;50,51, registriert. Die momentane Dichte kann dann errechnet bzw. aus Eichkurven abgelesen werden.

Durch den kreisrunden Rohrquerschnitt der Rohrschleifenanordnung 20 und Biegeradien R, die mindestens dem Doppelten des Rohrdurchmessers entsprechen, kann durch die Anschlußleitungen 37,38 zur Reinigung der Rohrschleifenanordnung 20 ein Reinigungsstopfen - ein sogenannter Molch - eingeführt werden, welcher mit der Strömung des fließfähigen Mediums durch die Rohrschleifenanordnung 20 bewegt wird und mechanisch die Innenwandungen der Rohrschleifenanordnung 20 von Rückständen befreit.

In den gezeigten Ausführungsbeispielen beträgt der Außendurchmesser des die Rohrschleifenanordnung 20 bildenden Rohres 12,5 mm (Halbzoll) und die Wandstärke etwa 2 mm. Der Radius R beträgt etwa 24 mm. Die Länge 42 der die Anschlußrohre bildenden Schenkel 24,25, also der Abstand der Unterseite des Rohrschleifenträgers 4 zur Oberseite des Massekörpers 26, beläuft sich auf etwa 2R. Die von dem Massekörper 26 frei vorkragende Länge 44 der U-förmigen Rohre 16,17 beträgt etwa 4R, die Höhe 43 des Massekörpers in Richtung der Schenkel der U-förmigen Rohre 16,17 etwa 1,5R.

## Patentansprüche

1. Dichtegeber (100) für ein fließfähiges Medium, insbesondere für die Verwendung zur Messung der Dichte pumpfähiger Flüssigkeiten im Bereich der Lebensmittelindustrie,
mit zwei von dem zu messenden Medium durchströmten U-förmigen in parallelen Ebenen einander gegenüberliegend angeordneten Rohren (16,17), die an den freien Enden zweier parallel zu den Ebenen einander gegenüberliegender Schenkel (22,23) durch einen Rohrbogen (21) zu einer endlosen doppelten Rohrschleifenanordnung (20) verbunden sind, wobei die beiden anderen Schenkel (24,25) in ihrer Richtung verlängert sind und die Anschlußrohre bilden,
mit einem nahe dem Rohrbogen (21) auf dessen dem Scheitel der U-förmigen Rohre (16,17) zugewandten Seite angeordneten Einspannelement, in dem die Enden der Schenkel der U-förmigen Rohre (16,17) gehalten sind,
mit Anschlußrohren für das fließfähige Medium zu dem Einspannelement, die ihrerseits das Einspannelement tragen,
mit einem die U-förmigen Rohre (16,17) mit ihren freien Scheiteln in gegenseitige Biegeschwingungen in einer zu ihrer Ebene senkrechten Ebene mit einer nahe der Eigenfrequenz der nicht durchströmten Rohre gelegenen Anregungsfrequenz versetzenden Schwingungsantrieb (11,32;50',51')
und mit einer Einrichtung zur Messung der Veränderung der Eigenfrequenz (13,34;50,51,) bei einer Durchströmung des Rohres mit dem fließfähigen Medium,
**dadurch gekennzeichnet,**
daß das Einspannelement als Massekörper (26) ausgebildet, dessen Masse mindestens das Vierfache der Masse der Rohrschleifenanordnung (20), gerechnet von einem die Rohrschleifenanordnung tragenden Rohrschleifenträger (4), beträgt.

2. Dichtegeber nach Anspruch 1, dadurch gekennzeichnet, daß der Massekörper (26) ein Mittelteil (27) und ein erstes das eine der beiden U-förmigen Rohre (16) auf die eine Seite des Mittelteils sowie ein zweites das andere der U-förmigen Rohre (17) auf die andere Seite des Mittelteils (27) festlegendes Außenteil (28,28') umfaßt.

3. Dichtegeber nach Anspruch 2, **dadurch gekennzeichnet,** daß die Teile (27,28,28') des Massekörpers miteinander und/oder mit den Schenkeln (22,23,24,25) der U-förmigen Rohre verschweißt oder verlötet sind.

4. Dichtegeber nach Anspruch 2, **dadurch gekennzeichnet,** daß der Massekörper (26) aus einer Klemmvorrichtung besteht, deren Teile (27,28,28') nur in der Mitte zwischen den Schenkeln der U-förmigen Rohre (16,17) senkrecht zu deren Ebene zusammengespannt sind.

5. Dichtegeber nach einem der Ansprüche 1 bis 4, **dadurch gekennzeichnet,** daß die Rohre so ausgebildet sind, daß die Eigenfrequenz der Rohrschleifenanordnung (20) je nach zu ihrer Herstellung verwendetem Material in der Größenordnung von 500 bis 1000 Hz, vorzugsweise bei etwa 750 Hz bei einer Rohrschleifenanordnung aus Edelstahl liegt.

6. Dichtegeber nach einem der Ansprüche 1 bis 5, **dadurch gekennzeichnet,** daß der die Rohrschleifenanordnung (20) anregende Schwingungsantrieb eine auf der dem Rohrschieifeninneren zugewandten Mantelfläche in der Mitte der 180° Rohrkrümmung (18) des einen U-förmigen Rohres (16) angeordnete mit ihrer Spulenlängsachse die Mittellinie der Rohrschleifenanordnung (20) senkrecht schneidende Erregerspule (11) mit einem Spulenkern (55) ist, welcher ein an der 180° Rohrkrümmung (19) des anderen U-förmigen Rohres (17) vorgesehenes Erregerankopplungselement (32) gegenüberliegt.

7. Dichtegeber nach einem der Ansprüche 1 bis 6, **dadurch gekennzeichnet,** daß die die Eigenfrequenz der Rohrschleifenanordnung (20) messende Einrichtung eine auf der nach außen gerichteten Mantelfläche in der Mitte der 180° Rohrkrümmung (19) des einen U-förmigen Rohres (17) angeordnete mit ihrer Spulenlängsachse die Mittellinie der Rohrschleifenanordnung (20) senkrecht schneidende Aufnehmerspule (13) mit einem Spulenkern (56) ist, welcher ein an der 180° Rohrkrümmung (18) des anderen U-förmigen Rohres (16) vorgesehenes Aufnehmerankopplungselement (34) gegenüberliegt.

8. Dichtegeber nach den Ansprüchen 6 und 7, **dadurch gekennzeichnet,** daß das eine U-förmige Rohr (16) die Erregerspule (11) und das Aufnehmerankopplungselement (34), das andere U-förmige Rohr (17) die Aufnehmerspule (13) und das Erregerankopplungselement (32) trägt.

9. Dichtegeber nach einem der Ansprüche 1 bis 5, **dadurch gekennzeichnet,** daß der die Rohrschleifenanordnung (20) anregende Schwingungsantrieb eine Spule (50') mit einem Spulenkern (57') ist, die einem auf der der äußeren Rohrschleifenseite zugewandten Mantelfläche in der Mitte der einen 180° Rohrkrümmung (19) angeordneten Erregerankopplungselement (51') gegenüberliegt, wobei die Spule (50') an einem starren, mit dem Massekörper (26) verbundenen ersten Trägerarm (52'), der sich etwa parallel zu der von dem einen U-förmigen Rohr (17) aufgespannten Ebene (E') seitlich der Rohrschleifenanordnung erstreckt, derart befestigt ist, daß ihre Spulenachse (S'') die Mittellinie (L) der Rohrschleifenanordnung (20) senkrecht schneidet.

10. Dichtegeber nach Anspruch 9, **dadurch gekennzeichnet,** daß die die Eigenfrequenz der Rohrschleifenanordnung (20) messende Einrichtung eine Spule (50) mit einem Spulenkern (57) ist, die einem auf der der äußeren Rohrschleifenseite zugewandten Mantelfläche in der Mitte der anderen 180° Rohrkrümmung (18) angeordneten Aufnehmerankopplungselement (51) gegenüberliegt, wobei die Spule (50) an einem starren, mit dem Massekörper (26) verbundenen zweiten Trägerarm (52), der sich etwa parallel zu der von dem anderen U-förmigen Rohr (16) aufgespannten Ebene (E) seitlich der Rohrschleifenanordnung erstreckt, derart befestigt ist, daß ihre Spulenachse (S''') mit der Spulenachse (S'') der Spule (50') zusammenfällt und die Mittellinie (L) der Rohrschleifenanordnung (20) senkrecht schneidet.

11. Dichtegeber nach Anspruch 9 oder 10, **dadurch gekennzeichnet,** daß die Trägerarme (52,52') über eine nahe den Rohrkrümmungen (18,19) angeordnete, sich durch das Innere der Rohrschleifenanordnung erstreckende Versteifungsbrücke (53) miteinander verbunden sind, welche die Mittellinie der Rohrschleifenanordnung etwa senkrecht schneidet.

12. Dichtegeber nach einem der Ansprüche 6 bis 11, dadurch gekennzeichnet, daß der Spulenkern (55,57') der Erregerspule (11,50') aus einem weichmagnetischen Material besteht und das Erregerankopplungselement (32,51') als Permanentmagnet ausgebildet ist, dessen Pole in Richtung der Spulenachse (S,S'') der Spule (11,50') weisen.

13. Dichtegeber nach einem der Ansprüche 6 bis 11, dadurch gekennzeichnet, daß der Spulenkern (55,57)') der Erregerspule (11,50') aus einem Permanentmagneten besteht, dessen Pole in Richtung der Spulenachse (S,S'') der Spule (11,50') weisen und das Erregerankopplungselement (32,51') aus einem ferromagnetischen Plättchen besteht.

14. Dichtegeber nach einem der Ansprüche 6 bis 13, dadurch gekennzeichnet, daß der Spulenkern (56,57) der Aufnehmerspule (13,50) aus einem weichmagnetischen Material besteht und das Aufnehmerankopplungselement (34,51) als Permanentmagnet ausgebildet ist, dessen Pole in Richtung der Spulenachse (S',S''') der Spule (13,50) weisen.

15. Dichtegeber nach einem der Ansprüche 6 bis 13, dadurch gekennzeichnet, daß der Spulenkern (56,57) der Aufnehmerspule (13,50) aus einem Permanentmagneten besteht, dessen Pole in Richtung der Spulenachse (S',S''') der Spule (13,50) weisen und das Aufnehmerankopplungselement (34,51) aus einem ferromagnetischen Plättchen besteht.

16. Dichtegeber nach einem der Ansprüche 1 bis 15, dadurch gekennzeichnet, daß der Schwingungsantrieb und die die Eigenfrequenz der Rohrschleifenanordnung messende Einrichtung aus den gleichen Komponenten aufgebaut ist.

17. Dichtegeber nach einem der Ansprüche 6 bis 16, **dadurch gekennzeichnet,** daß die Erreger- bzw. Aufnehmerspulen (11,13,50,50') und/oder die Erreger- bzw. Aufnehmerankopplungselemente (32,34;51,51') außer auf den einander zugewandten Seiten ferromagnetisch abgeschirmt sind.

18. Dichtegeber nach einem der Ansprüche 1 bis 17, **dadurch gekennzeichnet,** daß er ein vakuumdichtes Gehäuse (35) umfaßt, in weichem die Rohrschleifenanordnung (20) untergebracht ist.

19. Dichtegeber nach einem der Ansprüche 1 bis 18, **dadurch gekennzeichnet,** daß die Rohrkrümmungen (18,19) an den Scheiteln der U-förmigen Rohre (16,17) und an dem Rohrbogen (21) mit einem mittleren Biegeradius von mindestens dem Doppelten des Rohrinnendurchmessers ausgeführt sind.

20. Dichtegeber nach einem der Ansprüche 1 bis 19, **dadurch gekennzeichnet,** daß die Wandstärke der U-förmigen Rohre (16,17) mindestens 4%, vorzugsweise etwa 8%, ihres Außendurchmessers beträgt.

21. Dichtegeber nach einem der Ansprüche 1 bis 15, dadurch gekennzeichnet, daß die Torsionssteifigkeit der Rohrschleifenanordnung (20) um ein mehrfaches größer als deren Biegesteifigkeit ist.

## Claims

1. Density sensor (100) for a fluid medium, in particular for using to measure the density of pumpable fluids in the field of the foodstuffs industry,
with two U-shaped tubes (16, 17) arranged opposite one another in parallel planes, through which the medium to be measured flows and which are connected at the free ends of two limbs (22, 23) lying opposite one another parallel to the planes to an endless double tube loop assembly (20) through a tube bend (21), the two other limbs (24, 25) being extended in their direction and forming the connection pipes,
with a clamping element arranged near the tube bend (21) on that side of it which faces towards the bight of the U-shaped tubes (16, 17), in which element the ends of the limbs of the U-shaped tubes (16, 17) are held,
with connecting pipes for the fluid medium to the clamping element, which in their turn carry the clamping element,
with a vibration driver (11, 32; 50', 51') setting the U-shaped tubes (16, 17) with their free bights in mutually opposed bending vibrations in a plane perpendicular to their plane at an excitation frequency which is set near the natural frequency of the tubes when not carrying fluid,
and with a device for measuring the change in the natural frequency (13, 34; 50, 51) when the fluid medium passes through the tube,
characterised in that
the clamping element is in the form of a massive body (26) of which the mass is at least four times the mass of the tube loop assembly (20), reckoned from a tube loop carrier (4) which supports the tube loop assembly.

2. Density sensor according to claim 1, characterised in that the massive body (26) comprises a central portion (27) and a first outer portion (28) securing one of the two U-shaped tubes (16) on the one side of the central portion as well as a second outer portion (28') securing the other one of the U-shaped tubes (17) on the other side of the central portion (27).

3. Density sensor according to claim 2, characterised in that the portions (27, 28, 28') of the massive body are welded or soldered together and/or to the limbs (22, 23, 24, 25) of the U-shaped tubes.

4. Density sensor according to claim 2, characterised in that the massive body (26) comprises a clamping device of which the portions (27, 28, 28') are clamped together perpendicular to their plane only in the middle between the limbs of the U-shaped tubes (16, 17).

5. Density sensor according to one of claims 1 to 4, characterised in that the tubes are formed so that the natural frequency of the tube loop assembly (20) lies, according to the material used for its manufacture, in the order of magnitude of 500 to 1000 Hz, preferably at about 750 Hz in a tube loop assembly made of stainless steel.

6. Density sensor according to one of claims 1 to 5, characterised in that the vibration driver which excites the tube loop assembly (20) is an excitation coil (11) mounted on the surface which faces towards the tube loop inside in the middle of the 180° bend (18) of the one U-shaped tube (16) with the longitudinal axis of its coil intersecting perpendicularly the centre line of the tube loop assembly (20), the coil having a core (15) which lies opposite an excitation coupling element (32) provided on the 180° bend (19) of the other U-shaped tube (17).

7. Density sensor according to one of claims 1 to 6, characterised in that the device measuring the natural frequency of the tube loop assembly (20) is a pick-up coil (13) mounted on the outwardly directed surface in the middle of the 180° bend (19) of the one U-shaped tube (17) with the longitudinal axis of its coil intersecting perpendicularly the centre line of the tube loop assembly (20), the coil having a core (56) which lies opposite a pick-up coupling element (34) provided on the 180° bend (18) of the other U-shaped tube (16).

8. Density sensor according to claims 6 and 7, characterised in that the one U-shaped tube (16) carries the excitation coil (11) and the pick-up coupling element (34) and the other U-shaped tube (17) carries the pick-up coil (13) and the excitation coupling element (32).

9. Density sensor according to one of claims 1 to 5, characterised in that the vibration driver which excites the tube loop assembly (20) is a coil (50') with a core (57') which lies opposite an excitation coupling element (51') mounted on that surface which faces the outer tube loop side in the middle of the 180° tube bend (19), the coil (50') being secured to a rigid first carrier arm (52') connected to the massive body (26) and extending laterally of the tube loop assembly substantially parallel to the plane (E') occupied by the one U-shaped tube (17), in such a way that the axis (S") of its coil intersects perpendicularly the centre line (L) of the tube loop assembly (20).

10. Density sensor according to claim 9, characterised in that the device measuring the natural frequency of the tube loop assembly (20) is a coil (50) having a core (57) which lies opposite a pick-up coupling element mounted on the surface facing the outer tube loop side in the middle of the other 180° tube bend (18), the coil being secured to a rigid second carrier arm (52) which is connected to the massive body (26) and which extends laterally of the tube loop assembly substantially parallel to the plane (E) occupied by the other U-shaped tube (16), in such a way that the axis (S"') of its coil coincides with the axis (S'') of the coil (50') and intersects perpendicularly the centre line (L) of the tube loop assembly (20).

11. Density sensor according to claim 9 or 10, characterised in that the carrier arms (52, 52') are connected together through a stiffening bridge (53) arranged near the tube bends (18, 19) and extending through the interior of the tube loop assembly, the bridge intersecting the centre line of the tube loop arrangement substantially perpendicularly.

12. Density sensor according to one of claims 6 to 11, characterised in that the core (55, 57') of the excitation coil (11, 50') is made of soft magnetic material and the excitation coupling element (32, 51') is in the form of a permanent magnet of which the poles lie in the direction of the axis (S, S") of the coil (11, 50').

13. Density sensor according to one of claims 6 to 11, characterised in that the core (55, 57') of the excitation coil (11, 50') comprises a permanent magnet of which the poles lie in the direction of the axis (S, S") of the coil (11, 50') and the excitation coupling element (32, 51') comprises a ferromagnetic platelet.

14. Density sensor according to one of claims 6 to 13, characterised in that the core (56, 57) of the pick-up coil (13, 50) is made of soft magnetic material and the pick-up coupling element (34, 51) is in the form of a permanent magnet of which the poles lie in the direction of the axis (S', S"') of the coil (13, 50).

15. Density sensor according to one of claims 6 to 13, characterised in that the core (56, 57) of the pick-up coil (13, 50) comprises a permanent magnet of which the poles lie in the direction of the axis (S' S"') of the coil (13, 50) and the pick-up coupling element (34, 51) comprises a ferromagnetic platelet.

16. Density sensor according to one of claims 1 to 15, characterised in that the vibration driver and the device measuring the natural frequency of the tube loop assembly is made of the same components.

17. Density sensor according to one of claims 6 to 16, characterised in that the excitation and pick-up coils (11, 13, 50, 50') and/or the excitation and pick-up coupling elements (32, 34; 51, 51') are screened ferromagnetically outside on the mutually facing sides.

18. Density sensor according to one of claims 1 to 17, characterised in that it has a vacuum-tight housing (35) in which the tube loop assembly (20) is mounted.

19. Density sensor according to one of claims 1 to 18, characterised in that the tube bends (18, 19) at the bights of the U-shaped tubes (16, 17) and at the tube bend (21) are made with a mean bending radius of at least twice the inside diameter of the tube.

20. Density sensor according to one of claims 1 to 19, characterised in that the wall thickness of the U-shaped tubes (16, 17) amounts to at least 4%, preferably about 8%, of their outside diameter.

21. Density sensor according to one of claims 1 to 15, characterised in that the torsional stiffness of the tube loop assembly (20) is many times greater than its stiffness in bending.

## Revendications

1. Densimètre (100) pour un milieu fluide, notamment pour mesurer la densité de fluide susceptible d'être pompé, dans les applications de l'industrie alimentaire, comprenant :
- deux tubes (16, 17) en forme de U, situés dans des plans parallèles, opposés et qui sont traversés par le fluide à mesurer, les extrémités libres de ces tubes étant reliées à deux branches (22, 23) parallèles, opposées aux plans, et qui sont reliées par un coude tubulaire (21) pour former un dispositif à boucle tubulaire (20) double, sans fin, les deux autres branches (24, 25) étant prolongées dans leur direction et formant les tubes de raccordement,
- un élément de serrage à proximité du coude tubulaire (21), prévu sur son côté tourné vers le sommet des tubes en forme de U (16, 17), dans lequel sont tenues les extrémités des branches du tube en forme de U (16, 17),
- des tubes de raccordement pour le milieu fluide pour l'élément de serrage et qui portent à leur tour l'élément de serrage,
- un entraînement d'oscillation (11, 32 ; 50', 51') mettant les tubes en forme de U (16, 17) avec leur sommet libre dans des oscillations de flexion réciproques dans un plan perpendiculaire à leur plan, une fréquence d'excitation proche de la fréquence propre des tubes non traversés par un fluide,
- et l'installation pour mesurer la variation de la fréquence propre (13, 34 ; 50, 51) lors du passage dans le tube du milieu fluide,
caractérisé en ce que
l'élément de serrage est en forme de corps massique (26) dont la masse représente au moins quatre fois la masse du dispositif à boucle tubulaire (20), calculée à partir d'un support de boucle tubulaire (4) qui porte le dispositif à boucle tubulaire.

2. Densimètre selon la revendication 1,
caractérisé en ce que
le corps massique (26) comprend une partie centrale (27) et une première partie fixant l'un des deux tubes (16) en forme de U d'un côté de la partie centrale ainsi qu'une seconde partie fixant l'autre tube en forme de U (17) de l'autre côté de la partie centrale (27) fixant la partie extérieure ( 28, 28').

3. Densimètre selon la revendication 2,
caractérisé en ce que
les pièces (27, 28, 28') du corps massique sont soudées ou brasées les unes aux autres et/ou aux branches (22, 23, 24, 25) du tube en forme de U.

4. Densimètre selon la revendication 2,
caractérisé en ce que
le corps massique (26) se compose d'un dispositif de serrage dont les parties (27, 28, 28') ne sont serrées que jusqu'au milieu entre les branches des tubes en forme de U (16, 17), perpendiculairement à leur plan.

5. Densimètre selon l'une des revendications 1 à 4,
caractérisé en ce que
les tubes sont réalisés pour que la fréquence propre du dispositif à boucle tubulaire (20), suivant sa matière de fabrication soit de l'ordre de grandeur de 500 à 1000 Hz et se situe de préférence à environ 750 Hz pour un dispositif à boucle tubulaire en acier spécial.

6. Densimètre selon l'une des revendications 1 à 5,
caractérisé en ce que
l'entraînement d'oscillation qui excite le dispositif à boucle tubulaire (20) est une bobine d'excitation (11) munie d'un noyau de bobine (55), cette bobine étant montée sur la surface enveloppe tournée vers l'intérieur de la boucle tubulaire, au milieu du coude tubulaire (18) à 180° de l'un des tubes en forme de U (16) avec son axe longitudinal de bobine coupant perpendiculairement l'axe du dispositif à boucle tubulaire (20), et le noyau (55) de la bobine d'excitation est en regard d'un élément de découplage d'excitation (32) prévu sur le coude tubulaire (19) à 180° de l'autre tube en forme de U (17).

7. Densimètre selon l'une des revendications 1 à 6,
caractérisé en ce que
l'installation qui mesure la fréquence propre du dispositif à boucle tubulaire (20) est une bobine de réception (13) munie d'un noyau de bobine (56), cette bobine étant montée sur la surface enveloppe extérieure au milieu du coude tubulaire (19) à 180° de l'un des tubes en forme de U (17), et l'axe longitudinal de la bobine coupant perpendiculairement l'axe du dispositif à boucle tubulaire (20), et le noyau de bobine (56) est en regard d'un élément de couplage de réception (34) prévu sur le coude tubulaire (18) à 180° de l'autre tube en forme de U (16).

8. Densimètre selon les revendications 6 et 7,
caractérisé en ce qu'
un tube en forme de U (16) porte la bobine d'excitation (11) et l'élément de découplage de réception (34) et l'autre tube (17) en forme de U porte la bobine de réception (13) et l'élément de couplage d'excitation (32).

9. Densimètre selon l'une des revendications 1 à 5,
caractérisé en ce que
l'entraînement d'oscillation qui excite le dispositif à boucle tubulaire (20) est une bobine (50') munie d'un noyau de bobine (57') en regard d'un élément de couplage d'excitation (51') prévu sur la surface enveloppe tournée vers le côté extérieur de la boucle tubulaire, au milieu d'un coude tubulaire (19) à 180°, la bobine (50') étant fixée à un premier bras de support (52') rigide, relié au corps massique (26) et qui s'étend sensiblement parallèlement au plan (E') sous-tendu par l'un des tubes en forme de U (17), et s'étendant latéralement par rapport au dispositif à boucle tubulaire en étant fixé de façon que son axe de bobine (S") coupe perpendiculairement la ligne d'axe (L) du dispositif à boucle tubulaire (20).

10. Densimètre selon la revendication 9,
caractérisé en ce que
l'installation mesurant la fréquence propre du dispositif à boucle tubulaire (20) est une bobine (50) munie d'un noyau de bobine (57), cette bobine étant en regard d'un élément de couplage de réception (51) prévu sur la surface enveloppe tournée vers le côté extérieur de la boucle tubulaire extérieure, au milieu de l'autre coude tubulaire (18) à 180°, la bobine (50) étant fixée à un second bras de support (52) rigide relié au corps massique (26), et qui s'étend sensiblement parallèlement au plan (E) sous-tendu par l'autre tube (16) en forme de U, à côté du dispositif à boucle tubulaire en étant fixé pour que son axe de bobine (S''') coïncide avec l'axe de bobine (S") de la bobine (50') et coupe perpendiculairement l'axe (L) du dispositif à boucle tubulaire (20).

11. Densimètre selon la revendication 9 ou 10,
caractérisé en ce que
les bras de support (52, 52') sont reliés par un pont de rigidification (53) prévu à proximité des coudes tubulaires (18, 19) et qui s'étend sur l'intérieur du dispositif à boucle tubulaire, ce pont coupant sensiblement perpendiculairement la ligne d'axe du dispositif à boucle tubulaire.

12. Densimètre selon l'une des revendications 6 à 11,
caractérisé en ce que
le noyau de bobine (55, 57') de la bobine d'excitation (11, 50') est en matière à aimantation douce et l'élément de couplage d'excitation (32, 51') est en forme d'aimant permanent dont les pôles sont tournés dans la direction de l'axe (S, S") de la bobine (11, 50').

13. Densimètre selon l'une des revendications 6 à 11,
caractérisé en ce que
le noyau de bobine (55, 57') de la bobine d'excitation (11, 50') est un aimant permanent dont les pôles sont tournés dans la direction de l'axe de bobine (S, S'') des bobines (11, 50') et l'élément de couplage d'excitation (32, 51') est formé d'une plaquette ferromagnétique.

14. Densimètre selon l'une des revendications 6 à 13,
caractérisé en ce que
le noyau de bobine (56, 57) de la bobine de réception (13, 50) est en matière à aimantation douce et l'élément de couplage de réception (34, 51) est en forme d'aimant permanent dont les pôles sont dirigés dans la direction des axes (S, S''') des bobines (13, 50).

15. Densimètre selon l'une des revendications 6 à 13,
caractérisé en ce que
le noyau de bobine (56, 57) de la bobine de réception (13, 50) est un aimant permanent dont les pôles sont dirigés dans la direction de l'axe de bobine (S', S''') de la bobine (13, 50) et l'élément de couplage de réception (34, 51) est formé d'une plaquette ferromagnétique.

16. Densimètre selon l'une des revendications 1 à 15,
caractérisé en ce que
l'entraînement en oscillation et l'installation mesurant la fréquence propre du dispositif à boucle tubulaire sont formés des mêmes composants.

17. Densimètre selon une des revendications 6 à 16,
caractérisé en ce que
les bobines d'excitation et de réception (11, 13 ; 50, 50') et/ou les éléments de couplage d'excitation et de réception (32, 34 ; 51, 51') sont protégés de manière ferromagnétique à l'exception des côtés tournés l'un vers l'autre.

18. Densimètre selon l'une des revendications 1 à 17,
caractérisé en ce qu'
il comporte un boîtier (35) étanche au vide et qui loge le dispositif à boucle tubulaire (20).

19. Densimètre selon l'une des revendications 1 à 18,
caractérisé en ce que
les coudes tubulaires (18, 19) au sommet des tubes en forme de U (16, 17) et aux arcs tubulaires (21) ont un rayon de cintrage moyen égal au moins au double du diamètre intérieur des tubes.

20. Densimètre selon l'une des revendications 1 à 19,
caractérisé en ce que
l'épaisseur de paroi des tubes en forme de U (16, 17) représente au moins 4 % et de préférence environ 8 % du diamètre extérieur.

21. Densimètre selon l'une des revendications 1 à 15,
caractérisé en ce que
la rigidité à la torsion du dispositif à boucle tubulaire (20) est supérieure d'un multiple à la résistance à la flexion.
